Europäisches Patentamt

European Patent Office

Office européen des brevets

(11) Veröffentlichungsnummer: **0 386 292 B1**

## (12) EUROPÄISCHE PATENTSCHRIFT

(45) Veröffentlichungstag der Patentschrift: **26.05.93**

(51) Int. Cl.⁵: **H02P 8/00**

(21) Anmeldenummer: **89104135.2**

(22) Anmeldetag: **08.03.89**

(54) **Verfahren und Anordnung zur Regelung von Schrittmotoren.**

(43) Veröffentlichungstag der Anmeldung:
**12.09.90 Patentblatt 90/37**

(45) Bekanntmachung des Hinweises auf die
Patenterteilung:
**26.05.93 Patentblatt 93/21**

(84) Benannte Vertragsstaaten:
**DE FR GB IT**

(56) Entgegenhaltungen:
**EP-A- 0 151 296**
**US-A- 4 229 682**
**US-A- 4 446 406**

**CONTROL ENGINEERING. vol. 33, no. 14, Dezember 1986, NEW YORK US Seiten 144 -
147; K.M. KING: "STEPPER MOTOR CONTROL
USING EMF COMMUTATION"**

**IEEE TRANSACTIONS ON INDUSTRIAL
ELECTRONICS vol. IE-32, no. 3, August 1985,
US Seiten 215 - 222; P.P. ACARNLEY ET AL:
"DETECTION OF ROTOR POSITION IN STEP-
PING AND SWITCHED MOTORS BY MONITO-
RING OF CURRENT WAVEFORMS"**

**PATENT ABSTRACTS OF JAPAN vol. 10, no.
125 (E-402)(2182) 10 Mai 1986, & JP-A-60**

**257791 (HITACHI SEISAKUSHO K.K.) 19 Dezember 1985,**

(73) Patentinhaber: **SIEMENS AKTIENGESELL-
SCHAFT
Wittelsbacherplatz 2
W-8000 München 2(DE)**

(72) Erfinder: **Eissfeldt, Heinrich
Possartstrasse 24
W-8000 München 80(DE)**

(74) Vertreter: **Meissner, Peter E., Dipl.-Ing. et al
Meissner & Meissner, Patentanwaltsbüro,
Hohenzollerndamm 89
W-1000 Berlin 33 (DE)**

**Beschreibung**

Die Erfindung betrifft ein Verfahren und eine Anordnung zur Regelung von Schrittmotoren gemäß den Patentansprüchen 1 und 9.

Für viele technische Anwendungen, insbesondere für Stell – und Positionierantriebe in Druckeinrichtun – gen werden aufgrund der leichten Steuerbarkeit durch digitale Signale in zunehmendem Maße Schrittmo – toren eingesetzt. Das charakteristische Verhalten des Schrittmotors ist das schrittweise Drehen der Motor – welle pro angelegtem Eingangsspannungsimpuls. Eine Umdrehung der Motorwelle setzt sich aus einer genau definierten, vom Motoraufbau abhängigen Anzahl von Einzelschritten zusammen. Als Schritt wird dabei der Vorgang bezeichnet, bei dem sich die Motorwelle um den Schrittwinkel dreht. Bei einem Schrittmotor handelt es sich also um ein diskretes Stellglied, das quantisierte Drehbewegungen ausführen kann. Bei einer schnellen Folge der Ansteuerimpulse geht die Schrittbewegung in eine kontinuierliche Drehbewegung über.

Schrittmotoren haben normalerweise mehrere, voneinander unabhängige ein – und ausschaltbare Feldspulen (Phasen des Stators), mit denen sich innerhalb des Stators ein Magnetfeld erzeugen läßt, das in seiner Richtung und Intensität verändert werden kann. Weiter ist bei einem Permanentmagnet – Schrittmotor ein permanentmagnetischer Rotor vorhanden, der sich abhängig vom Statorfeld jeweils auf die Position des geringsten magnetischen Widerstandes einstellt. Abhängig von der Ausführung der Feldspulen unterschei – det man zwischen Schrittmotoren für Unipolarbetrieb und solchen für Bipolarbetrieb.

Jede Statorspule eines für Unipolarbetrieb entwickelten Schrittmotors ist mit einem Mittelabgriff verse – hen, der mit einer Versorgungsleitung (z.B. Plus) verbunden ist. Die Richtung des Stromes durch die Statorspule ist abhängig von der Spulenhälfte, die über einen Steuerschalter mit der Minusversorgungslei – tung verbunden ist. Durch Umschalten der Spulenhälften wird in den Magnetpolen des entsprechenden Stators eine Umpolung des Magnetfeldes erreicht.

Bei Schrittmotoren für Bipolarbetrieb haben die Feldspulen keinen Mittelabgriff. Statt des abwechseln – den Betriebs von Spulenhälften wird hier zur Umpolung der Strom durch die ganze Spule umgeschaltet. Dies wird durch doppelpolige Umschalter erreicht. Die sonstige Arbeitsweise ist wie beim Unipolarbetrieb.

Durch die Anzapfung der Spulen beim Unipolar – Schrittmotor wird nur immer eine Häfte vom Strom durchflossen und das Leistungsvolumen vom Motor wird nicht voll genutzt. Aus diesem Grunde ergibt sich beim Bipolarbetrieb (Wicklung wird voll ausgenutzt) ein um etwa 30% größeres Drehmoment. Der Motor ist kostengünstiger, da er keine Spulenanzapfungen aufweist. Demgegenüber steht beim Bipolarbetrieb eine aufwendigere Ansteuerelektronik (zwei Umschalter je Feldspule), deren Aufwand sich jedoch durch Ver – wendung integrierter Schaltungen verringert.

Im normalen Vollschrittbetrieb wird das Statorfeld für jeden Schritt um einen elektrischen Winkel von 90˚ fortgeschaltet. Dies bedeutet, daß die Rotorzielposition um 90˚ weitergedreht wurde. Da der Rotor sich vorläufig noch an der vorherigen Zielposition befindet, entsteht sozusagen schlagartig ein Drehmoment, welches den Rotor einen Schritt weiterdreht und damit in die neue Zielposition führt. Der diesen elektri – schen Winkel von 90˚ entsprechende mechanische Schrittwinkel hängt ab von der Anzahl der Magnetpol – paare des Rotors und der Anzahl der Phasen des Stators. Beim zweiphasigen Schrittmotor entspricht eine Drehung des Statorfeldvektors um 90˚ einem Vollschritt des Rotors. Ist der Rotor an seinem Umfang z.B. mit 25 Polpaaren (d.h. mit 50 individuellen Magneten) aufmagnetisiert, so ergibt dies einen Schrittwinkel von 3,6˚.

Das maximale Drehmoment, auch Haltemoment genannt, ergibt sich bei den meisten Motoren dann, wenn der elektrische Winkel zwischen Rotor und Statorfeldvektoren etwa 90˚ beträgt. Am Schrittende ist dieser Winkel und damit auch das Drehmoment Null, da der Rotor die neue Zielposition erreicht hat. Dies bedeutet, das im Einzelschrittbetrieb und bei niedrigen Schrittraten das Motormoment ständig zwischen Null und 100% schwankt.

Eine Verbesserung der Auflösung bei gleichbleibend hoher Positioniergenauigkeit kann durch Aufteilung des Vollschrittes in mehrere Mikroschritte erreicht werden (Mikroschrittbetrieb).

Der konstruktive Aufbau, insbesondere die verschiedenen Ausführungsformen, wie Permanentmagnet – Schrittmotor, Schrittmotoren mit weichmagnetischem Anker nach dem Reluktanzprinzip, Hybridmotoren sowie deren Ansteuerungsarten sind hinlänglich bekannt und z.B. aus der Druckschrift "Sigma Stepping Motor Handbook" 1972 von Sigma Instruments Inc. – Braintree, Massachusetts, USA beschrieben.

Bisher werden Schrittmotoren in den meisten Anwendungsfällen nicht in einem geschlossenen Regel – kreis betrieben, sondern es ist ein gesteuerter Betrieb üblich. Dabei wird die Schrittfrequenz, also die Anzahl der Schritte, die der Läufer (Rotor) bei konstanter Steuerfrequenz in einer Sekunde ausführt, dem Bewegungszustand des Rotors über ein geeignetes Programm angepaßt. Um dieses Programm zu erstellen, sind genaue Kenntnisse über die anzutreibende Last nötig. Sind die Lastverhältnisse nicht genau bekannt, so muß der Antrieb im allgemeinen mit großen Leistungsreserven ausgelegt werden.

In Anwendungsfällen, bei den aus dynamischen Gründen der gesteuerte Betrieb völlig unzureichend ist, kann auf einen geschlossenen Lageregelkreis nicht verzichtet werden. Dieser ermöglicht durch seine selbsttätige Regelung der Schrittfrequenz eine wesentlich bessere Ausnutzung der Leistungsreserven des Motors. Um bei solchen Systemen die Lage des Rotors zu messen, wird im allgemeinen ein optisch arbeitender inkrementaler Drehgeber verwendet. Da dieser die Schrittauflösung des Motors mindestens erreichen, manchmal sogar übersteigen muß, ist bei Motoren mit kleinem Schrittwinkel ein aufwendiges und damit teures System erforderlich.

Aus diesem Grunde sind bereits einige Verfahren vorgeschlagen worden, die es gestatten, einen Schrittmotor in einem geschlossenen Regelkreis zu betreiben, ohne eines externen Lagegebers zu bedürfen (z.B. P.P. Arkanley, R.J. Hill, C.W. Hooper, Detection of rotor − position in stepping and switched motors by monitoring the current waveforms IEEE Trans. IE − 32 (1985)).

Da für solche Verfahren ebenfalls nur eine bestimmte Bauart von Schrittmotoren geeignet ist und außerdem die Auswerteschaltungen auf die Daten des jeweiligen Schrittmotors abgeglichen werden müs − sen, sind diese Verfahren für Großserien und Integration nicht geeignet.

Darüber hinaus sind Verfahren bekannt, den Schrittmotor nicht nur als Aktor, sondern auch gleichzeitig als Sensor einzusetzen, um dadurch die tatsächliche Rotorposition des Schrittmotors zu erfassen.

Eine Möglichkeit ist die Erkennung der Rotorposition durch Messung der Kleinsignalinduktivität der Wicklung. Bei Motoren, deren Drehmomententwicklung auf dem Reluktanzprinzip basiert, ist dies eine Folge der Änderung des Widerstandes im magnetischen Kreis einer Wicklung, auf der auch die Drehmomentent − wicklung beruht. Um die Kleinsignalinduktivität zu messen, können dann die Schaltzeiten eines Zweipunkt − stromreglers ausgewertet werden. Damit läßt sich ein einfaches digitales System für den geregelten Hochlauf eines Reluktanzmotors aufbauen. Das Verfahren ist auch bei Motoren mit permanenterregtem Motor anwendbar. Hierbei wird die Änderung der Kleinsignalinduktivität durch die unterschiedliche Sätti − gung des Statormaterials bewirkt. Die Sättigung ist eine Folge der drehwinkelabhängigen magnetischen Kopplung von Rotor und Statorwicklung. Für die Auswertung können wieder die Schaltzeiten eines Zweipunkt − Stromreglers herangezogen werden. Im Gegensatz zum Reluktanzmotor ist bei anderen Moto − rentypen die Amplitude des Meßsignals sehr klein, so daß der Störabstand sehr gering ist. Dies führt dazu, daß die Messung durch die induzierte Gegenspannung und Wirbelströme im Statormaterial sehr stark beeinträchtigt wird. Zum anderen muß der Motor im Bereich der magnetischen Sättigung des Stators betrieben werden, was sich bei vielen Motoren erfahrungsgemäß nicht als günstig erweist.

Ein weiteres Verfahren, die sensorischen Eigenschaften eines Schrittmotors zu nutzen, ist die Auswer − tung der in den Wicklungen induzierten Gegenspannung. Sie liefert bei allen Schrittmotorbauarten während des Bewegungsvorganges ein Meßsignal ausreichender Amplitude. Sie ist deshalb in unterschiedlicher Form für die Drehzahlregelung von Synchronmaschinen eingesetzt worden. Das Problem, die Rotorposition im Stillstand festzuhalten, wird hier für fremderregte Maschinen durch die Auswertung der Kopplung von Erreger − und Statorfluß gelöst. Auch für die elektronische Kommutierung von kollektorlosen Gleichstrom − motoren kann die Auswertung der induzierten Gegenspannung herangezogen werden.

All diesen bekannten Verfahren ist gemeinsam, daß sie nur die Regelung des Hochlaufvorgangs berücksichtigen und nicht den Bremsvorgang und die Erkennung der Drehrichtungsumkehr ermöglichen, wie es für Positionierantriebe bekanntermaßen notwendig ist.

Aufgabe der Erfindung ist es deshalb, Maßnahmen anzugeben, mit denen ein schrittfehlerfreier Betrieb von Schrittmotoren beliebiger Bauart im geschlossenen Regelkreis ohne externen Lagegeber und ohne vorhergehende Kenntnis der dynamischen Lastverhältnisse mit minimalem Abgleichaufwand ermöglicht wird, wenn die systembedingte Begrenzung des statischen Lastmomentes nicht überschritten wird.

Diese Aufgabe wird gemäß den Merkmalen der Patentansprüche 1 und 9 gelöst. Vorteilhafte Weiter − bildungen sind in den Unteransprüchen gekennzeichnet.

Das erfindungsgemäße Verfahren löst das Problem für Zweiphasenschrittmotoren beliebiger Bauart. Um eine hohe Leistungsausbeute zu erreichen, werden sie im Two − phase − on − Modus betrieben, d.h. bei einem zweiphasigen Motor sind beide Wicklungen gleichzeitig eingeschaltet. Da der Schrittmotor dabei sowohl im Einzelschritt als auch im Mikroschrittbetrieb eingesetzt werden kann, fordert die Meßeinrichtung somit keine Zugeständnisse seitens der Betriebsweise des Motors. Die Ermittlung der Meßgröße beruht auf der Auswertung der infolge der Drehbewegung des Rotors in den Statorwicklungen induzierten Spannun − gen. Diese liefern durch geeignete Verknüpfung ein Positionssignal, das im Falle des Einzelschrittbetriebs ein ortsdiskretes Signal, ähnlich dem einer Taktscheibe ist. Beim Mikroschrittbetrieb entsteht ein kontinu − ierliches Signal, wie es für eine Regelung in dieser Betriebsart erforderlich ist. Die Regelung für den Einzelschrittbetrieb ist ein völlig digitales zeitdiskretes System. Bei einem L/R − Treiber werden die von Null ansteigenden Statorströme der zwei Phasen verglichen und im Falle der Gleichheit ein Schrittakt ausgelöst.

3

Dieser veranlaßt einen Abbau der Ströme in den beiden Wicklungen. Nach einer Kommutierungspause steigen die Ströme entsprechend der neuen magnetischen Raststellung von neuem an. Damit ist ein stabiler, schrittfehlerfreier Hochlaufvorgang gewährleistet. Das System erhält die Eigenschaften eines Gleichstrommotors mit Taktscheibe. Bei einem Bremsvorgang wird erst geschaltet, wenn die zweite Nullstelle der Stromdifferenz durchlaufen wird. Dadurch wird eine Voreilung des Rotors gegenüber dem magnetischen Feld erreicht, wodurch ein fehlerfreier Bremsvorgang bis zum Stillstand erzielt werden kann.

Beim Mikroschrittbetrieb ist ein analoger Teil im Regelungssystem vorgesehen. Über einen Störgrößenbeobachter, der eine strom–spannungsinverse Nachbildung der Schrittmotorwicklung enthält, wird die induzierte Gegenspannung in beiden Phasen beobachtet und über einen steuerbaren Verstärker und einen Filter auf die jeweils andere Phase zurückgeführt. Damit ist die Vorgabe eines Moments ohne den sonst bei Synchronmaschinen üblichen Feldrechner möglich. In den unteren Drehzahlbereichen ist ein gesteuerter Betrieb vorgesehen, der beim Übergang in den mittleren und oberen Drehzahlbereich mit den Reglersignalen synchronisiert wird. Damit können auf einfache Weise Polradpendelungen aktiv bedämpft werden.

Im Folgenden werden Ausführungsbeispiele der Erfindung anhand von Zeichnungen näher beschrieben. Es zeigen

Figur 1 Beispiele für den vorteilhaften Einsatz von Schrittmotoren in einer Druckeinrichtung,

Figur 2 ein Blockschaltbild der erfindungsgemäßen Anordnung,

Figur 3 qualitativ den Verlauf der Stromdifferenz der beiden Wicklungsströme,

Figur 4 ein detailliertes Schaltbild für die Regelung bei unipolaren Schrittmotoren,

Figur 5 ein Teil–Schaltbild für die Regelung von bipolaren Schrittmotoren und

Figur 6 und 7 Signalflußpläne für die Regelung von Schrittmotoren im Mikroschrittbetrieb.

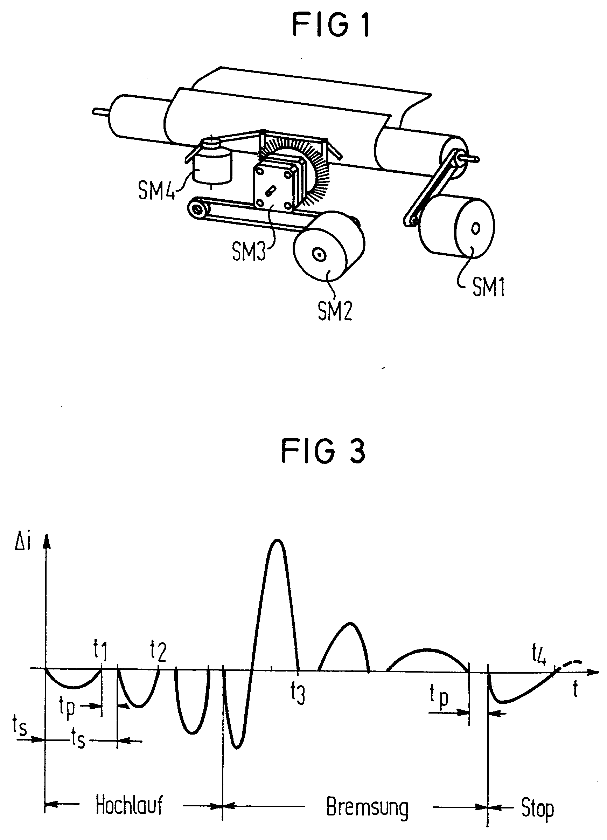

In Figur 1 sind in stark vereinfachter Darstellung wesentliche Teile einer Druckeinrichtung dargestellt, die von Schrittmotoren angetrieben werden. So sind Papiervorschub, Wagenbewegung, Typenscheibendrehung und der Farbbandtransport mit Schrittmotoren SM1 bis SM4 realisiert.

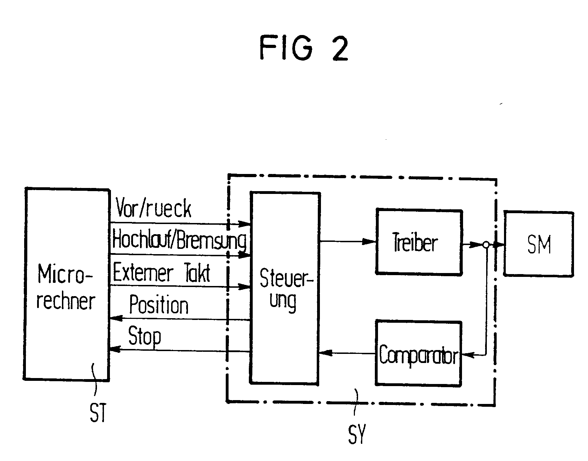

Die Steuerung von solchen Schrittmotoren besteht in der soweit als möglich positionsrichtigen Nachführung von Positionierschritten des Schrittmotors zu vorgegebenen Sollschritten. Dabei soll, wenn die Motorleistung es zuläßt, keine Verzögerung der am Motor applizierten Schritte gegen die vorgegebenen Schritte auftreten. Ist dies nicht möglich, so sollen die Schritte so verzögert werden, daß kein Schrittverlust eintritt. Die für die Ansteuerung erforderliche Information wird über die Rotorposition aus der Messung der Statorströme abgeleitet. Die Statorströme werden dabei zur Ermittlung des Lastwinkels eingesetzt. Da dies aufgrund der infolge der Rotorbewegung induzierten Gegenspannung geschieht, ist eine Ermittlung der Rotorstellung im Stillstand nicht möglich. Der Stillstand nimmt deshalb eine besondere Stellung unter den Bewegungszuständen des Rotors ein. Ein Blockschaltbild des Systems zeigt Figur 2. Es besteht aus einer durch einen Mikrorechner realisierten übergeordneten Steuerung ST und einem unterlagerten System SY in Form einer Selbststeuerschaltung. Das unterlagerte System SY hat die Aufgabe, die vorgegebenen Schritte so an die Schrittmotortreiber weiterzugeben, wie es den Befehlen an seinem Eingang entspricht. Im selbstgesteuerten Betrieb kann zwischen Anlaufen und Bremsen bei beliebiger Drehrichtung gewählt werden. Darüber hinaus kann für einen Betrieb mit konstanter Geschwindigkeit die Selbststeuerung ausgeblendet und der Schrittmotor SM mit einem externen Takt gespeist werden. Als Ausgangssignal erhält die übergeordnete Steuerung ST die an einen Controller weitergegebenen Impulse, um einen Positionszähler betreiben zu können. Wird während eines Bremsvorganges der Stillstand erreicht, d.h. wird eine Drehrichtungsumkehr erkannt, so wird ein Signal an die übergeordnete Steuerung ST abgegeben und die Impulse der Selbststeuerung werden unterdrückt. Das Verhalten der übergeordneten Steuerung ST bei einem Positioniervorgang ist dann das folgende: ist eine gewisse Schrittdistanz zu durchfahren, so holt der Rechner aus einer in einem nicht näher dargestellten Speicher abgelegten Tabelle einen der Distanz entsprechenden Wert. Dieser gibt an, wann eine Bremsung eingeleitet werden muß. Daraufhin wird ein Hochlaufsignal ausgegeben, bis der Tabellenwert erreicht ist. Der Bremsvorgang wird eingeleitet, der Rechner wartet auf das Stopsignal. Ist das System zum Stillstand gekommen, und stimmt die Position aufgrund von Störungen nicht mit der Sollposition überein, so kann mit einer Geschwindigkeit unterhalb der Start–Stopfrequenz die Sollposition fremdgesteuert angefahren werden. Bei ihrem Erreichen kann ein an sich bekannter Dämpfungsregler eingeschaltet werden, wodurch das System der Ruhelage weitgehend zeitoptimal zustrebt.

Um die Schrittfortschaltung des Schrittmotorantriebs der augenblicklichen Belastung anpassen zu können, ist ein Signal erforderlich, das die Ausführung eines von der Steuerung vorgegebenen Schrittes bestätigt. Ein solcher Schritt kann als ausgeführt betrachtet werden, wenn der dynamische Lastwinkel die Größe eines Schrittwinkel nicht überschreitet. Der dynamische Lastwinkel ist der Winkel, um den der in Drehbewegung oder Drehschwingung befindliche Läufer (Rotor) in einem bestimmten Augenblick von der durch den vorhergehenden Steuerimpuls gegeben magnetischen Raststellung entfernt ist. Wenn die

4

Steuerung dann um einen Schritt weiterschaltet, kommt der Motor nicht außer Tritt. Eine solche Schrittbe‒stätigung wird bei der erfindungsgemäßen Selbststeuerschaltung durch Beobachtung der induzierten Gegenspannung gewonnen. Bei Schrittmotoren im Unipolarbetrieb wird die Spannung an den jeweils stromlosen Phasen gemessen. Sie ist bis auf eine Konstante, den Strömen in den jeweils induktiv gekoppelten Spulen proportional.

Sind beide Wicklungen des Schrittmotors bestromt, so erhält man für die Statorströme $i_1$ und $i_2$ bei einem Zweiphasen‒Schrittmotor die folgenden Gleichungen

$$L \cdot \frac{di_1}{dt} = U_0 + K \cdot \sin\left(\varphi - \frac{\pi}{4}\right) \cdot \frac{d\varphi}{dt} - i_1 \cdot R \qquad (1)$$

$$L \cdot \frac{di_2}{dt} = U_0 + K \cdot \sin\left(\varphi + \frac{\pi}{4}\right) \frac{d\varphi}{dt} - i_2 \cdot R \qquad (2)$$

mit
L Induktivität der Statorwicklung
$U_0$ Betriebsspannung
K vom Aufbau des Schrittmotors abhängige Konstante
$\phi$ dynamischer Lastwinkel
R Wicklungswiderstand.

Wird der Schrittmotor mit eingeprägter Spannung betrieben, d.h. ist während der Bestromung die Spannung an der Wicklung konstant, so erhält man für die Differenz der beiden Statorströme $i_1$, $i_2$, wenn diese von Null ansteigen:

$$\Delta i = (i_2 - i_1) = e^{-\frac{R}{L}t} \cdot \frac{1}{L}\left(\int_0^t K \cdot \sqrt{2} \cdot \cos\varphi \frac{\partial\varphi}{\partial t} \cdot e^{+\frac{R}{L}t} \, dt\right) \qquad (3)$$

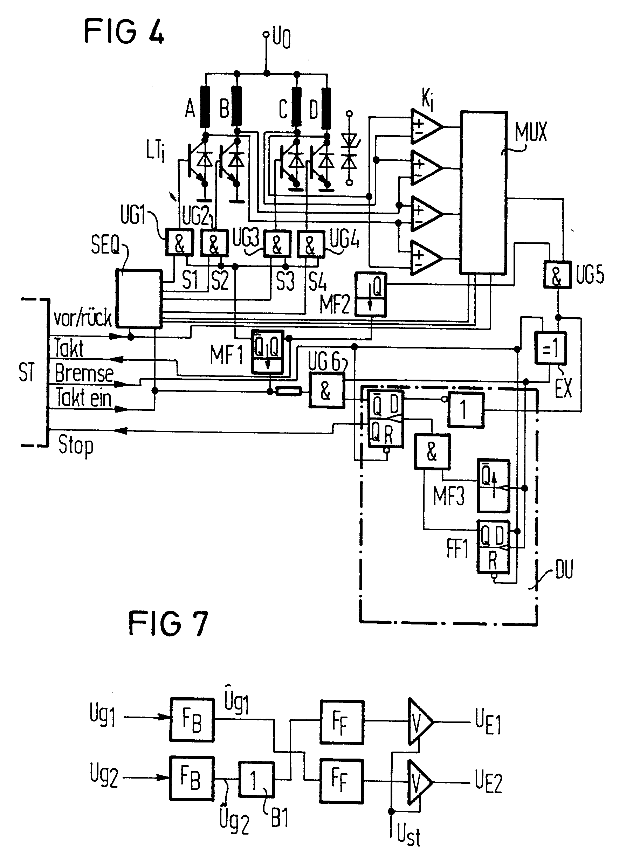

In Figur 3 ist qualitativ der zeitliche Verlauf dieser Stromdifferenz $\Delta_i$ dargestellt. Demnach gliedert sich ein Positioniervorgang mit Hilfe eines Schrittmotors in drei Teilbereiche, nämlich in einen Hochlaufbereich, einen Bremsbereich und einen Stopbereich, während dem der Rotor auf die Sollposition einschwingt. Auf der Zeitachse t ist dabei mit $t_s$ die reziproke Schrittfrequenz bezeichnet, also die Zeit zwischen zwei aufeinanderfolgenden Schrittakten. Die Kommutierungspause ist mit $t_p$ bezeichnet. Während die Zeitspan‒nen $t_s$ zwischen zwei aufeinanderfolgenden Schrittakten während des Hochlaufs immer geringer werden, bleibt die Kommutierungspause $t_p$ konstant.

Es wird nun davon ausgegangen, daß während eines Beschleunigungsvorganges nur positive Ge‒schwindigkeiten auftreten. Außerdem wird im Moment des Anfahrens der Lastwinkel in einem beschränkten Bereich um die magnetische Raststellung liegen. Der Bereich ist durch die Wicklungsströme $i_1$, $i_2$ und das statische Lastmoment gegeben. Die Erfahrung zeigt, daß letzteres 50% des Haltemoments nicht über‒schreiten sollte. Damit wird die Ungleichung für den Lastwinkel beim Start:

$$-\arcsin\left(\tfrac{1}{2}\right) < \phi_0 < \arcsin\left(\tfrac{1}{2}\right) \qquad (4)$$

Durch Vorgabe eines Startimpulses wird das System gestartet. Der Schrittmotor läuft los und die Stromdifferenz $\Delta_i$ folgt der Gleichung (3). Um einen Beschleunigungsvorgang ohne Schrittverlust zu erreichen, muß sichergestellt werden, daß der nächste Impuls für die Schrittfortschaltung erst ausgegeben wird, wenn für den dynamischen Lastwinkel $\phi$ die folgende Ungleichung gilt:

$$-\tfrac{\pi}{2} < \phi < 0 \qquad (5)$$

Dies wird dadurch erreicht, daß der früheste Zeitpunkt, einen Schrittakt auszulösen, von der gemesse‒nen Stromdifferenz $\Delta_i$ abgeleitet wird. Er ist erreicht, wenn ein Nulldurchgang von negativen zu positiven Werten stattfindet. Aus Gleichung (3) erhält man dann die Ungleichung:

$$\int_0^t \cos\varphi \ \frac{d\varphi}{dt} \ dt \ \leq \ 0 \qquad (6)$$

Wenn nun beim vorhergehenden Schrittakt die Bedingung (5) erfüllt war, so ist sie auch bei der Registrierung des Nulldurchgangs der Stromdifferenz $\Delta_i$ erfüllt (Zeitpunkt $t_1$ in Figur 3).

Ein stabiler Beschleunigungsvorgang ist jetzt schon dadurch zu erreichen, daß beim Erkennen des Nulldurchgangs jeweils ein weiterer Schrittakt ausgegeben wird. Der dynamische Lastwinkel $\phi$, der bei diesem Verfahren auftritt, liegt zwischen $-90°$ und $-180°$ elektrischen Winkels. Der Vorteil des Verfahrens liegt darin, daß die Stromdifferenz im allgemeinen vor einem, im Hinblick auf die Größe des Drehmoments, optimalen Schaltzeitpunkt kommt. Um aus der Stromdifferenz eine Aussage über die Rotorstellung ableiten zu können, muß bei jedem Schritt der Anfangswert der Differenz zu Null gemacht werden. Dies kann beispielsweise dadurch geschehen, daß nach einem Schrittakt der Strom in beiden Phasen zu Null gemacht wird. Es entsteht eine Pause in der Kommutierung (Zeitspanne $t_p$ in Figur 3), während der der Strom abgebaut wird. Nach der Kommutierungspause $t_p$ steigen die Wicklungsströme entsprechend der neuen magnetischen Raststellung wieder an. Beim ersten Nulldurchgang der Stromdifferenz (Zeitpunkt $t_2$ in Figur 3) wird wieder geschaltet. Dadurch führt der Schrittmotor einen stabilen Hochlaufvorgang aus. Dieser kann bei Erreichen der Sollgeschwindigkeit von der übergeordneten Steuerung ST durch einen synchronen Betrieb mit konstanter Taktfrequenz fortgesetzt werden. Diese Maßnahmen bedeuten zwar eine geringfügige Verschlechterung des elektromechanischen Wirkungsgrades, bei einer hinreichend kurzen Dauer der Pause ist die Verminderung für Kleinantriebe aber ohne Bedeutung. Hier muß man außerdem berücksichtigen, daß ein Motor in offener Steuerkette mit einem bedeutenden Sicherheitsfaktor dimensioniert werden müßte. Die Kommutierungspause $t_p$ hat außerdem den Vorteil, den Motor über die Schrittakte hinaus digital steuerbar zu machen. Durch die Länge der Kommutierungspause $t_p$ wird nämlich die Leerlaufdrehzahl und die Drehzahldrehmomentkennlinie des selbstgesteuerten Motors beeinflußt.

Das Stromdifferenzsignal $\Delta_i$ eignet sich auch, um einen Bremsvorgang geregelt durchzuführen. Der früheste Zeitpunkt für eine Schrittfortschaltung ist dann der Nulldurchgang von positiven zu negativen Werten, d.h. erst beim zweiten Nulldurchgang des Signals $\Delta_i$ (Zeitpunkt $t_3$ in Figur 3) wird geschaltet. Damit wird eine Voreilung des Rotors gegenüber dem magnetischen Statorfluß erreicht. Der dynamische Lastwinkel nimmt positive Werte an. Der Bremsvorgang ist formal dem Beschleunigungsvorgangs völlig identisch, so daß an dieser Stelle auf die beschreibenden Gleichungen nicht mehr eingegangen wird. So kann der Motor ohne Schrittfehler bis zur Geschwindigkeit Null selbstgesteuert abgebremst werden. Ist dies geschehen, so schwingt das System in die Ruhelage ein (Stopbereich in Figur 3).

Während des Einschwingvorgangs treten jedoch Änderungen der Drehrichtung auf (Zeitpunkt $t_4$ in Figur 3), die ohne geeignete Maßnahmen weitere Schrittakte analog dem beschriebenen Verfahren im Hochlaufbereich auslösen würden. Aus diesem Grunde ist eine Erkennung der Drehrichtungsumkehr erforderlich. Hierzu wird im Moment der Kommutierung für einen neuen Schritt, also nach Ablauf der Kommutierungspause $t_p$, das Vorzeichen der zeitlichen Änderung der Stromdifferenz $\Delta_i$ gemessen.

Wird während des Bremsvorgangs, also bei positiven Lastwinkeln, ein Nulldurchgang erkannt, so gilt für die Stromdifferenz nach der Kommutierung

$$\text{sgn}\left(\frac{d\Delta_i}{dt}(t=0)\right) = \text{sgn}\left(\frac{d\varphi}{dt}(t=0)\right) \qquad (7)$$

Damit kann die Drehrichtungsumkehr sofort erkannt werden. Wird eine solche erkannt, so werden keine weiteren Schrittakte mehr ausgegeben. Das System schwingt in seine Ruhelage ein. Um ein gut gedämpftes Einschwingen in die Ruhelage zu gewährleisten, reicht die mechanische Systemdämpfung oftmals nicht aus. Um die dynamische Leistungsfähigkeit des Systems nicht zu beeinträchtigen, ist die Systemdämpfung aber bis zum Erreichen der richtigen Schrittposition möglichst gering zu halten. Zur Dämpfung des Einschwingvorgangs ist sie den Systemeigenschaften anzupassen. Diese Anpassung ist jedoch unkritisch.

In Figur 4 ist ein detailliertes Schaltbild für die Steuerung bei unipolaren Schrittmotoren gemäß dem vorher beschriebenen Verfahren dargestellt. Mit den Bezugszeichen A bis D sind die Spulenhälften der Statorwicklung bezeichnet, bei denen jeweils ein Anschluß an den positiven Pol einer Versorgungsspannung $U_0$ liegt. Die anderen Anschlüsse der Wicklungen sind jeweils über steuerbare Schalter – Leistungstreiber $LT_i$, im Ausführungsbeispiel durch Transistoren realisiert – mit der Minus – Versorgungsleitung (z.B. Masse 0 V) verbunden. Zum Schutz der Transistoren sind nicht näher bezeichnete Freilaufdioden zwischen Kollektor und Emitter eingeschaltet. Anstelle einer Freilaufdiode pro Leistungstreiber kann auch eine Reihenschaltung aus einer Diode und einer in Sperrichtung geschalteten Z – Diode vorgesehen werden, wie es in Fig. 4 zusätzlich als Alternativlösung eingezeichnet ist. Außerdem sind die an den Kollektoren der Leistungstreiber $LT_i$ angeschlossenen Wicklungsenden der Spulenhälften A bis D an Eingänge von vier Komparatoren $K_i$ geführt, wobei jeweils der invertierende Eingang eines Komparators mit dem nichtinvertierenden Eingang des nächsten Komparators verbunden ist. Die Ausgänge der Komparatoren $K_i$ sind an einen in herkömmli – cher Weise in TTL – Technik aufgebauten Multiplexer MUX geführt. Die Schaltung enthält ferner einen an sich bekannten Sequenzer SEQ zur phasenrichtigen Steuerung der Leistungstreiber $LT_i$. Die Ausgänge $S_1$ bis $S_4$ des Sequenzers SEQ sind mit den Eingängen der Leistungstreiber $LT_i$ (Basis der Transistoren) über UND – Gatter UG1 bis UG4 verbunden. Die weiteren Eingänge der UND – Gatter UGi sind gemeinsam an einen Ausgang $\overline{Q}$ einer monostabilen Kippstufe MF1 verbunden. Damit kann über die monostabile Kippstufe MF1 eine Kommutierungspause $t_p$ erzwungen werden. Beim Unipolarbetrieb von Schrittmotoren sind zwei jeweils im Umlaufsinn benachbarte Wicklungen mit einem der Komparatoren $K_i$ verbunden. Derjenige Komparator, der zu den zwei nicht bestromten Wicklungen gehört, signalisiert den Nulldurchgang der Stromdifferenz $\Delta_i$ durch eine Flanke. Eine aufsteigende Flanke bei positivem und eine abfallende Flanke bei negativem dynamischen Lastwinkel $\phi$. Über den vom Sequenzer SEQ gesteuerten Multiplexer MUX wird der jeweilige Komparator $K_i$ auf den Ausgang durchgeschaltet. Der Ausgang des Multiplexers MUX ist an einen Eingang eines weiteren UND – Gatters UG5 geführt. Der zweite Eingang des UND – Gatters UG5 ist mit dem Ausgang Q einer monostabilen Kippstufe MF2 verbunden, während der Ausgang des UND – Gatters UG5 an einen Eingang eines Exclusiv – ODER – Gatters EX1 geführt ist. An den weiteren Eingang des Exlusiv – ODER – Gatters EX1 steht das Signal "Bremse" von der übergeordneten Steuerung ST an. Der Eingang der monostabilen Kippstufe MF2 ist mit dem Ausgang der monostabilen Kippstufe MF1 verbunden. Über diese Verbindungsleitung wird immer, wenn eine Schrittfortschaltung erfolgt, ein Impuls, nämlich das Signal "Takt" an die übergeordnete Steuerung ST abgegeben, um ein Mitzählen der Schritte in der Steuerung ST zu ermöglichen.

Der Sequenzer SEQ erhält von der übergeordneten Steuerung ST die Information, welche Drehrichtung der Schrittmotor ausführen soll (Signal "vor/rück") und signalisiert die Schrittposition binär codiert dem Multiplexer MUX. Außerdem liegt an dem Sequenzer SEQ das Signal "Takt ein" an, welches auch an den Eingang der monostabilen Kippstufe MF1 und über einen nicht näher bezeichneten Widerstand an dem Ausgang eines UND – Gatters UG6 geführt ist.

Wird von der übergeordneten Steuerung ST Anlauf signalisiert, so bewirken ansteigende Flanken eine Schrittfortschaltung. Über die monostabile Kippstufe MF2 wird eine zeitliche Verzögerung der Fortschaltung gegen das Ende der Kommutierungspause $t_p$ erzwungen, was einer Hysterese zur Erhöhung der Störsi – cherheit gleichkommt. Dadurch wird ein Hochlauf erreicht. Wird nun ein Bremsvorgang eingeleitet, so wird der Ausgang des Multiplexers MUX mit Hilfe des Exklusiv – ODER – Gatters EX1 invertiert, so daß die negativen Flanken eine Schrittfortschaltung bewirken.

Der übrige Schaltungsteil, in der Figur 4 mit gestrichelten Linien umrandet und mit dem Bezugszeichen DU bezeichnet, dient der Erkennung der Drehrichtungsumkehr. Eine solche Schaltung ist erforderlich, um den Bremsvorgang beim Erreichen des Stillstands zu beenden. Wenn eine Drehrichtungsumkehr erfolgt, so hat dies ebenfalls eine Nullstelle des Signals $\Delta_i$ und damit eine Schrittfortschaltung zur Folge.

Die Erkennung ist nun deshalb möglich, weil das Vorzeichen des Signals nach der Kommutierungs – pause $t_p$ bei einer Drehrichtungsumkehr wechselt. Hierzu synchronisiert die bistabile Kippstufe FF1 das Signal "Bremse" mit den Schrittakten. Die monostabile Kippstufe MF3 bewirkt im Bremsvorgang ein Einlesen des Signals in die bistabile Kippstufe FF2 im Falle einer Drehrichtungsumkehr. Es wird das Signal "Stop" erzeugt und eine weitere Schrittfortschaltung unterbunden.

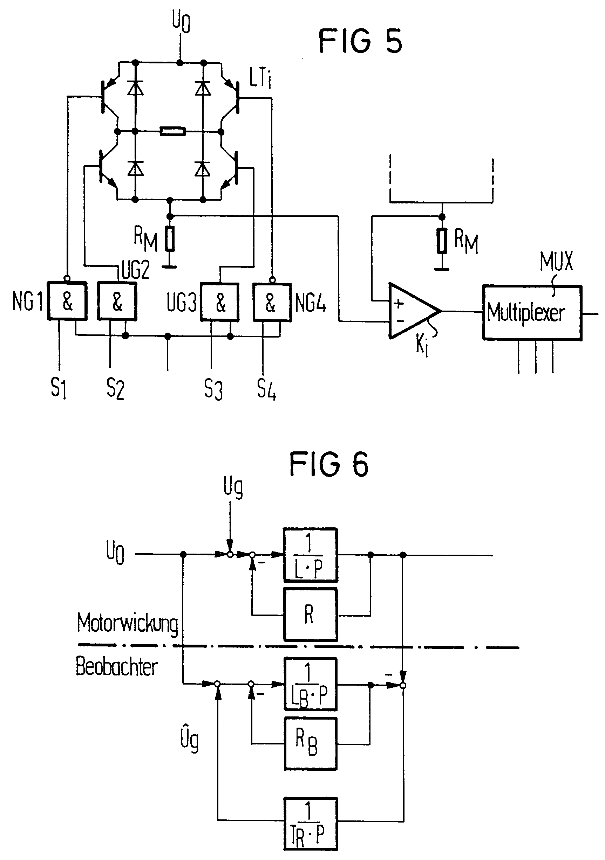

Sollen mit dem erfindungsgemäßen Verfahren Schrittmotoren im bipolaren Betrieb geregelt werden, so sind Änderungen der anhand der Figur 4 erläuterten Schaltungsanordnungen nötig. Die Figur 5 zeigt einen Schaltungsteil, der für bipolaren Betrieb geeignet ist. Von den beiden Feldspulen, die für einen solchen Betrieb erforderlich sind und deren äußere Beschaltung, ist aus Gründen der Übersichtlichkeit nur eine ausführlich dargestellt. Die Signale S1 bis S4 werden jetzt nicht wie bei unipolarem Betrieb ausschließlich über UND – Gatter UG1 bis UG4, sondern über UND – Gatter UG2, UG3 und über NAND – Gatter NG1, NG4 den Leistungstreibern $LT_i$ zugeführt. Meßwiderstände $R_M$ dienen zur Gewinnung von den Statorströmen proportionalen Spannungen, die mit Hilfe eines Komparators K direkt miteinander verglichen und das Ergebnis einem Multiplexer MUX zugeführt wird. Die Weiterverarbeitung des so erhaltenen Signales erfolgt in analoger Weise wie in der anhand von Figur 4 erläuterten Schaltungsanordnung. Die Dauer der Kommutierungspause $t_p$ soll dabei etwa 50 bis 100% der Zeitkonstante der Wicklung ausmachen. Die übrigen Zeiten sind unkritisch.

Bei Zureiphasen–Schrittmotoren, die im Mikroschrittbetrieb arbeiten, sind stets beide Phasen bestromt. Aus diesem Grunde kann die induzierte Gegenspannung nicht direkt gemessen werden. Deshalb wird für jede Phase in bekannter Weise ein Störgrößenbeobachter eingesetzt, mit dessen Hilfe ein Näherungswert für die Gegenspannung ermittelt wird. Die Figur 6 zeigt den Signalflußplan des Beobachters mit den in der Regelungstechnik üblichen Symbolen. Mit L ist dabei die Induktivität der Wicklung, mit R sein ohmscher Widerstand und mit P der in der Regelungstechnik gebräuchliche Operand bezeichnet. Die Statorwicklung liegt an der Betriebsspannung $U_0$, die induzierte Gegenspannung ist mit $U_g$ gekennzeichnet. Die Schrittmotorwicklung wird nachgebildet ("Beobachter") und dieser Nachbildung wird auch die Spannung zugeführt, die an die eigentliche Wicklung angelegt wird ($U_0$). Der fließende Strom wird gemessen, um den in der Nachbildung fließenden vermindert und diese Differenz über einen Integrator dem Eingang der Nachbildung zurückgeführt. Die Erfahrung zeigt, daß der Integrator etwa 10 mal schneller als im betragsoptimalen Fall eingestellt werden kann, ohne die Störungen durch Fehler in der Nachbildung mangelhaft zu unterdrücken.

Die so erhaltenen Ausgangssignale $\hat{U}_g$ können nun wieder über Filter und steuerbare Verstärker auf die Eingänge von Strom– oder Spannungsregler für die Wicklungen zurückgeführt werden. Die Figur 7 zeigt die dafür erforderliche Struktur. Die Blöcke $F_B$ stellen dabei die Übertragungsfunktionen des Störgrößenbeobachters und $F_F$ Filter zur Einstellung der Drehzahl/Drehmomentverlaufes dar. Der mit B1 bezeichnete Block dient dazu, eine Phasenverschiebung um $180\,^\circ$ zu erreichen. Dadurch wird auch gleichzeitig eine Voreilung der Spannung $U_{e1}$ gegenüber $U_{g1}$ und der Spannung $U_{e2}$ gegenüber der Spannung $U_{g2}$ erreicht. Über den Steuereingang $U_{st}$ der Verstärker V kann nun das Antriebsmoment des Motors direkt, ohne Kenntnis der Rotorstellung beeinflußt werden. Für die Filter $F_F$ sind bisher nur Proportionalglieder und Integratoren eingesetzt worden. Über eine geeignete Auswahl der Filter kann aber eine in weiten Bereichen drehzahlunabhängige Charakteristik erreicht werden. Ein Meßsignal für die momentane Geschwindigkeit erhält man durch Bildung der Summe der Quadrate der Gegenspannungen $U_{g1}$, $U_{g2}$. Mit diesem Signal und der Möglichkeit einer direkten Beeinflussung des Motordrehmoments kann in bekannter Weise eine Geschwindigkeitsregelung aufgebaut werden.

Auf diese kann im mittleren und oberen Drehzahlbereich eine Regelung aufgebaut werden, die das Antriebssystem mit geringen Abweichungen und geringer Restwelligkeit einem vorgegebenen Geschwindigkeitsprofil folgen läßt. Im unteren Drehzahlbereich, d.h. bis etwa 10% der maximalen Drehzahl, ist ein gesteuerter Betrieb vorzusehen, da hier der Störabstand zu gering ist, um einen einwandfreien geregelten Betrieb zu gewährleisten. Um ein Positionssignal zu erhalten, wird bei höheren Geschwindigkeiten die beobachtete Gegenspannung $U_g$ herangezogen. Es entstehen zwei um $90\,^\circ$ phasenverschobene Sinussi–gnale, wie am Ausgang eines optischen Winkelgebers. Bei niedrigen Geschwindigkeiten können die Meßwerte der Wicklungsströme einen Näherungswert der Rotorstellung liefern, der es dann bei höheren Geschwindigkeiten gestattet, trotz Mehrdeutigkeit der Sinussignale der Gegenspannung $U_g$ einen absoluten Positionswert zu erhalten.

**Patentansprüche**

1. Verfahren zur Regelung eines Zweiphasen–Schrittmotors, der in einem geschlossenen Regelkreis mit Hilfe einer übergeordneten Steuerung (ST) betrieben wird, wobei der Schrittmotor gleichzeitig als Aktor und Sensor dient und die infolge der Drehbewegung des Rotors induzierte Gegenspannung ($U_g$) zur Bestimmung der Rotorstellung ausgenützt wird mit folgenden Merkmalen:
   - die induzierte Gegenspannung ($U_g$) wird durch Messung der Ströme ($i_1$,$i_2$) in den Statorwicklun–gen (A–D) erfaßt,
   - die vom Wert Null ansteigenden Statorströme ($i_1$,$i_2$) werden miteinander verglichen und daraus ein Positionssignal (Stromdifferenzsignal $\Delta$ i) abgeleitet,
   - der Anfangswert des Stromdifferenzsignals ($\Delta$ i) wird bei jedem auszuführenden Schritt des Schrittmotors mit Hilfe einer Kommutierungspause ($t_p$) zu Null gemacht,
   - an die Statorwicklungen (A–D) wird ein Ansteuerimpuls gegeben, wodurch das Stromdifferenz–signal ($\Delta$ i) vom Wert Null bis zu einem Maximalwert steigt und anschließend wieder abfällt,
   - bei einer Nullstelle des Stromdifferenzsignals ($\Delta$ i) wird eine Schrittfortschaltung ausgelöst,
   - das Stromdifferenzsignal ($\Delta$ i) wird zur Regelung der Schrittakte sowohl während des Hochlaufvorganges und des Bremsvorganges als auch zur Erkennung der Drehrichtungsumkehr verwendet.

**2.** Verfahren nach Anspruch 1, **dadurch gekennzeichnet,** daß der Hochlaufvorgang bei Erreichen der Sollgeschwindigkeit mittels der übergeordneten Steuerung (ST) durch einen synchronen Betrieb mit konstanter Taktfrequenz ersetzt wird.

**3.** Verfahren nach Anspruch 1, **dadurch gekennzeichnet,** daß während des Hochlaufvorganges die Nulldurchgänge des Stromdifferenzsignals ($\Delta$ i) von negativen zu positiven Werten zur Schrittfortschaltung ausgewertet werden.

**4.** Verfahren nach Anspruch 1, **dadurch gekennzeichnet,** daß zur Schrittfortschaltung während des Bremsvorganges der Nulldurchgang des Stromdifferenzsignals ($\Delta$ i) von positiven zu negativen Werten ausgewertet wird.

**5.** Verfahren nach Anspruch 1, **dadurch gekennzeichnet,** daß zur Erkennung der Drehrichtungsumkehr während des Bremsvorganges nach Ablauf der Kommutierungsphase ($t_p$) das Vorzeichen der zeitlichen Änderung des Stromdifferenzsignales ($\Delta$ i) gemessen wird und bei Erkennung eines negativen Wertes des Stromdifferenzsignals ($\Delta$ i) keine Schrittakte mehr ausgegeben werden.

**6.** Verfahren nach Anspruch 1, **dadurch gekennzeichnet,** daß bei im Unipolarbetrieb betriebenen Schrittmotoren die induzierte Gegenspannung ($U_g$) an den jeweils stromlosen Phasen erfaßt wird, die den Strömen ($i_1$,$i_2$) in jeweils induktiv gekoppelten Phasen proportional sind.

**7.** Verfahren nach Anspruch 1, **dadurch gekennzeichnet,** daß bei Schrittmotoren, die im Bipolarbetrieb arbeiten, die Ströme in den beiden Statorwicklungen direkt verglichen werden.

**8.** Verfahren nach Anspruch 1, **dadurch gekennzeichnet,** daß bei Schrittmotoren im Mikroschrittbetrieb einer Nachbildung der Schrittmotorwicklung die Versorgungsspannung ($U_0$) zugeführt wird, die auch an der tatsächlichen Motorwicklung angelegt ist, der fließende Stromgemessen wird, um den in der Nachbildung der Wicklung fließenden Strom vermindert wird und die Differenz über einen Integrator auf den Eingang der Nachbildung zurückgeführt wird.

**9.** Schaltungsanordnung zur Durchführung des Verfahrens nach Anspruch 1 mit folgenden Merkmalen:
- einem in einem geschlossenen Regelkreis mit Hilfe einer übergeordneten Steuerung (ST) betriebenem Zweiphasen-Schrittmotor, wobei der Schrittmotor gleichzeitig als Aktor und Sensor dient und die infolge der Drehbewegung des Rotors induzierte Gegenspannung ($U_g$) zur Bestimmung der Rotorstellung ausgenutzt wird,
- der übergeordneten Steuerung (ST) ist ein unterlagertes System ($S_y$) in Form einer Selbststeuerschaltung nachgeschaltet,
- die Selbststeuerschaltung enthält Mittel zum Erfassen der induzierten Gegenspannung ($U_g$) und zum Vergleich daraus abgeleiteter Statorströme ($i_1$,$i_2$) und Mittel (MF1, UG$_1$-UG$_4$) zur Erzeu-gung einer Kommutierungspause ($t_p$),
- die Selbststeuerschaltung ($S_y$) enthält weiter eine Einrichtung (DU) zur Erkennung der Drehrichtungsumkehr, die bei erkannter Drehrichtungsumkehr ein Signal an die übergeordnete Steuerung (ST) abgibt und die Impulse der Selbststeuerschaltung ($S_y$) unterdrückt.

**10.** Schaltungsanordnung nach Anspruch 9, **dadurch gekennzeichnet,** daß die Selbststeuerschaltung ($S_y$) einen Sequenzer (SEQ) zur phasenrichtigen Steuerung von Leistungstreibern ($LT_i$) und zur Steuerung eines Multiplexers (MUX) enthält.

**11.** Schaltungsanordung nach Anspruch 9, **dadurch gekennzeichnet,** daß jeweils zwei im Umlaufsinn benachbarte Wicklungen des Stators mit einem Komparator ($K_i$) verbunden sind, dessen Ausgang an den Multiplexer (MUX) geführt ist.

**12.** Schaltungsanordnung nach Anspruch 9, **dadurch gekennzeichnet,** daß die Mittel zur Erzeugung der Kommutierungspause ($t_p$) mehrere UND-Gatter (UG$_1$-UG$_4$) und eine monostabile Kippstufe (MF1) umfassen.

**13.** Schaltungsanordnung nach Anspruch 9, **dadurch gekennzeichnet,** daß die Einrichtung zum Erkennen der Drehrichtungsumkehr sowohl eine bistabile Kippstufe ($F_{F1}$) umfaßt, welches beim Bremsvorgang ein Signal "Bremse" mit den Schrittakten synchronisiert, als auch eine monostabile Kippstufe (MF3) enthält, die im Falle eines Bremsvorganges ein Einlesen des Signals in eine weitere bistabile Kippstufe (F$_{F2}$) bewirkt.

14. Schaltungsanordnung nach Anspruch 9, **dadurch gekennzeichnet,** daß Mittel (EX1) vorhanden sind, die bei einem Bremsvorgang das Signal am Ausgang des Multiplexers (MUX) invertieren, so daß, bezogen auf die Schrittfortschaltung im Hochlaufvorgang eine Schrittfortschaltung durch Flanken entgegengesetzter Richtung bewirkt wird.

**Claims**

1. A method of controlling a two − phase stepping motor which is operated in a closed loop with the assistance of a superordinate control unit (ST), where the stepping motor serves simultaneously as actuator and sensor and the countervoltage ($U_g$), which is induced as a result of the rotational movement of the rotor, is used to determine the rotor position, comprising the following features:
    − the induced countervoltage ($U_g$) is detected by measuring the currents ($i_1$, $i_2$) in the stator windings (A − D),
    − the stator currents ($i_1$, $i_2$), ascending from the value zero, are compared with one another and a position signal (current difference signal $\Delta i$) is derived therefrom,
    − with each step of the stepping motor to be executed, the initial value of the current difference signal ($\Delta i$) is set at zero with the assistance of a commutation pause ($t_p$),
    − a drive pulse is supplied to the stator windings (A − D), whereby the current difference signal ($\Delta i$) ascends from the value zero to a maximum value and then falls again,
    − when the value of the current difference signal ($\Delta i$) is zero a stepping on procedure is triggered,
    − the current difference signal ($\Delta i$) is used to control the stepping clock signals both during the acceleration process and the deceleration process and also to recognise the reversal of the direction of rotation.

2. A method as claimed in Claim 1, characterised in that when the theoretical speed has been reached the acceleration process is replaced by means of the superordinate control unit (ST) with synchronous operation with a constant clock frequency.

3. A method as claimed in Claim 1, characterised in that during the acceleration process the zero transitions of the current difference signal ($\Delta i$) from negative to positive values are analyzed for the stepping on procedure.

4. A method as claimed in Claim 1, characterised in that during the deceleration process the zero transition of the current difference signal ($\Delta i$) from positive to negative values is analyzed for the stepping on procedure.

5. A method as claimed in Claim 1, characterised in that for the recognition of the reversal of the direction of rotation during the deceleration process, at the end of the commutation phase ($t_p$) the sign of the time − related change in the current difference signal ($\Delta i$) is measured and in the event that a negative value of the current difference signal ($\Delta i$) is recognised, no further stepping clock signals are emitted.

6. A method as claimed in Claim 1, characterised in that in the case of stepping motors operating in unipolar fashion the induced countervoltage ($U_g$) is detected in the respective currentless phases, said countervoltage being proportional to the currents ($i_1$, $i_2$) in respective inductively coupled phases.

7. A method as claimed in Claim 1, characterised in that in the case of stepping motors operating in bipolar fashion the currents in the two stator windings are directly compared.

8. A method as claimed in Claim 1, characterised in that in the case of stepping motors operating in micro − step fashion, a simulation of the stepping motor winding is supplied with the supply voltage ($U_0$) which is also connected to the actual motor winding, the flowing current is measured and is reduced by the current flowing in the simulation of the winding, and the difference is fed back via an integrator to the input of the simulation.

**9.** A circuit arrangement for the execution of the method claimed in Claim 1 comprising the following features:
- A two – phase stepping motor operated in a closed loop with the assistance of a superordinate control unit (ST), where the stepping motor serves simultaneously as actuator and sensor and the countervoltage ($U_g$), induced as a result of the rotational movement of the rotor, is used to determine the rotor position,
- the superordinate control unit (ST) is connected at its output end to a subordinate system ($S_y$) in the form of an automatic control circuit,
- the automatic control circuit comprises means for detecting the induced countervoltage ($U_g$) and for comparing stator currents ($i_1$, $i_2$) derived therefrom, and means (MF1, $UG_1 - UG_2$) for producing a commutation pause ($t_p$),
- the automatic control circuit ($S_y$) further comprises a device (DU) for recognising the reversal of the direction of rotation which, when a reversal of direction of rotation has been recognized, emits a signal to the superordinate control unit (ST) and suppresses the pulses of the automatic control circuit ($S_y$).

**10.** A circuit arrangement as claimed in Claim 9, characterised in that the automatic control circuit ($S_y$) comprises a sequencer (SEQ) for the in – phase control of power drivers ($LT_i$) and for the control of a multiplexer (MUX).

**11.** A circuit arrangement as claimed in Claim 9, characterised in that in each case two peripherally adjacent windings of the stator are connected to a comparator ($K_i$), the output of which leads to the multiplexer (MUX).

**12.** A circuit arrangement as claimed in Claim 9, characterised in that the means for producing the commutation pause ($t_p$) comprise a plurality of AND gates ($UG_1 - UG_4$) and a monostable circuit (MF1).

**13.** A circuit arrangement as claimed in Claim 9, characterised in that the device for recognising the reversal of the direction of rotation comprises both a bistable circuit ($F_{F1}$) which synchronises a "decelerate" signal with the stepping clock signals during the deceleration process, and also a monostable circuit (MF3) which during a deceleration process inputs the signal into a further bistable circuit ($F_{F2}$).

**14.** A circuit arrangement as claimed in Claim 9, characterised in that means (EX1) are provided which during a deceleration process invert the signal at the output of the multiplexer (MUX) so that, in respect of the stepping on procedure in the acceleration stage, stepping on is effected by flanks of opposite direction.

**Revendications**

**1.** Procédé pour régler un moteur pas à pas à deux phases, qui, dans un circuit de réglage fermé, est actionné à l'aide d'une commande associée (ST), le moteur pas à pas servant simultanément d'acteur et de capteur, et la contre – tension (Ug) induite par suite de la rotation du rotor étant exploitée pour déterminer la position du rotor, ayant les caractéristiques suivantes :
- la contre – tension induite (Ug) est détectée en mesurant les courants ($i_1$, $i_2$) dans les enroule – ments du stator (A – D),
- les courants du stator ($i_1$, $i_2$) croissant à partir de la valeur zéro sont comparés l'un à l'autre et, de cela, est dérivé un signal de position (signal de différence des courants $\Delta i$),
- la valeur initiale du signal de différence des courants ($\Delta i$), pour chaque pas à effectuer du moteur pas à pas, est amenée à zéro à l'aide d'une pause de commutation ($t_p$),
- une impulsion de commande est fournie aux enroulements du stator (A – D), grâce à quoi le signal de différence des courants ($\Delta i$) croît de la valeur zéro à une valeur maximale et ensuite chute à nouveau,
- lors d'une remise à zéro du signal de différence des courants ($\Delta i$), une progression de pas est déclenchée,
- le signal de différence des courants ($\Delta i$) est utilisé pour régler les cycles des pas, ainsi que pendant le processus d'accélération à pleine vitesse et le processus de freinage, et également

11

pour reconnaître l'inversion du sens de rotation.

2. Procédé selon la revendication 1,
caractérisé en ce que, lorsque la vitesse de consigne est atteinte, le processus d'accélération à pleine vitesse est remplacé par un fonctionnement synchrone à fréquence de cycle constante au moyen de la commande associée (ST).

3. Procédé selon la revendication 1,
caractérisé en ce que, pendant le processus d'accélération à pleine vitesse, les passages par zéro du signal de différence des courants ($\Delta i$) de valeurs négatives à des valeurs positives sont exploités pour la progression de pas.

4. Procédé selon la revendication 1,
caractérisé en ce que le passage par zéro du signal de différence des courants ($\Delta i$) de valeurs positives à des valeurs négatives est exploité pour la progression de pas pendant le processus de freinage.

5. Procédé selon la revendication 1,
caractérisé en ce que le signe de la modification temporelle du signal de différence des courants ($\Delta i$) est mesuré pour reconnaître l'inversion du sens de rotation pendant le processus de freinage après l'écoulement de la phase de commutation ($t_p$) et, lors de la reconnaissance d'une valeur négative du signal de différence des courants ($\Delta i$), aucun cycle de pas n'est plus fourni.

6. Procédé selon la revendication 1,
caractérisé en ce que, pour des moteurs pas à pas à fonctionnement unipolaire, la contre – tension induite (Ug) est détectée sur les phases respectives sans courant, qui sont proportionnelles aux courants ($i_1$, $i_2$) dans les phases respectives couplées de façon inductive.

7. Procédé selon la revendication 1,
caractérisé en ce que, pour des moteurs pas à pas qui travaillent en fonctionnement bipolaire, les courants sont comparés directement dans les deux enroulements du stator.

8. Procédé selon la revendication 1,
caractérisé en ce que, pour des moteurs pas à pas en fonctionnement à mlcro – pas, la tension d'alimentation ($U_0$) est amenée à une reproduction du bobinage du moteur pas à pas, tension qui est également amenée au bobinage réel du moteur, le courant qui circule est mesuré, est diminué du courant qui s'écoule dans la reproduction du bobinage, et la différence est ramenée à l'entrée de la reproduction par l'intermédiaire d'un intégrateur.

9. Montage pour la mise en oeuvre du procédé selon la revendication 1, ayant les caractéristiques suivantes :
    – un moteur pas à pas à deux phases, qui, dans un circuit de réglage fermé, est actionné à l'aide d'une commande associée (ST), le moteur pas à pas servant simultanément d'acteur et de capteur, et la contre – tension (Ug) induite par suite de la rotation du rotor étant exploitée pour déterminer la position du rotor,
    – un système en cascade ($S_y$) sous forme d'un montage à commande automatique est disposé en aval de la commande associée (ST),
    – le montage à commande automatique comporte des moyens pour détecter la contre – tension induite (Ug) et pour comparer des courants du stator ($i_1$,$i_2$) dérivés de celle – ci, et des moyens (MF1, $UG_1$ – $UG_4$) pour engendrer une pause de commutation ($t_p$),
    – le montage à commande automatique ($S_y$) comporte de plus un dispositif (DU) pour reconnaître l'inversion du sens de rotation, qui, lorsque l'inversion du sens de rotation est reconnue, délivre un signal à la commande associée (ST) et supprime les impulsions du montage à commande automatique ($S_y$).

10. Montage selon la revendication 9,
caractérisé en ce que le montage à commande automatique ($S_y$) comporte un séquenceur (SEQ) pour la commande correcte en phase de circuits d'attaque de puissance ($LT_i$) et pour la commande d'un multiplexeur (MUX).

**11.** Montage selon la revendication 9,
caractérisé en ce que, à chaque fois, deux enroulements, voisins dans le sens de la rotation, du stator sont reliés à un comparateur ($K_i$) dont la sortie est guidée vers le multiplexeur (MUX).

**12.** Montage selon la revendication 9,
caractérisé en ce que les moyens pour engendrer la pause de commutation ($t_p$) comportent plusieurs portes ET ($UG_1 - UG_4$) et une bascule monostable (MF1).

**13.** Montage selon la revendication 9,
caractérisé en ce que le dispositif pour reconnaître l'inversion du sens de rotation comporte aussi bien une bascule bistable ($F_{F1}$), laquelle, lors du processus de freinage, synchronise un signal "freinage" avec les cycles des pas, qu'une bascule monostable (MF3) qui, dans le cas d'un processus de freinage, permet de mémoriser le signal dans une autre bascule bistable ($F_{F2}$).

**14.** Montage selon la revendication 9,
caractérisé en ce que des moyens (EX1) sont prévus, qui, lors d'un processus de freinage, inversent le signal à la sortie du multiplexeur (MUX) de sorte que, relativement à la progression de pas, dans le processus d'accélération à pleine vitesse, une progression de pas est produite par des flancs de sens opposé.

# FIG 1

# FIG 3

# FIG 2

Micro-rechner — ST

Vor/rueck
Hochlauf/Bremsung
Externer Takt
Position
Stop

Steuer-ung

Treiber

SM

Comparator

SY

EP 0 386 292 B1

# FIG 4

# FIG 7

16

# FIG 5

# FIG 6